# DEMANDE DE BREVET EUROPEEN

(11) **EP 0 908 808 A1**
(43) Date de publication de la demande: **14.04.1999**
(21) Numéro de dépôt: 98402432.3
(22) Date de dépôt: 02.10.1998
(51) Int. Cl.: G05D 16/20

(54) **Procédé et dispositif de régulation d'au moins deux appareils de production**

(30) Priorité: 06.10.1997 FR 9712432
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Duflot, Nicolas, 77500 Chelles (FR); Charrier, Christophe, 92600 Asnieres sur Seine (FR); Jouvaud, Dominique, 75015 Paris (FR); Ollivier, Patrice, 28320 Ymeray (FR)
(74) Mandataire: Mellul, Sylvie Lisette

(57) **Abrégé**

L'invention concerne un procédé de régulation d'au moins deux appareils de production dont les sorties sont reliées en parallèle pour produire un flux commun de sortie qui est destiné à alimenter une installation consommatrice. Il assure la régulation du flux commun en fonction d'une valeur de consigne prédéterminée (u) et comporte les étapes consistant à mesurer au moins une variable représentative du flux commun de sortie ; déterminer, pour chaque appareil un ordre de commande correspondant à un état de fonctionnement de l'appareil parmi un ensemble fini d'états de fonctionnement prédéterminés ; et commander les appareils à partir des ordres de commande déterminés. Deux variables représentatives du flux commun de sortie sont mesurées et les ordres de commande sont déterminés par un régulateur à logique floue.

Application à la régulation d'un ensemble de compresseurs.

## Description

La présente invention concerne un procédé de régulation d'au moins deux appareils de production dont les sorties sont reliées en parallèle pour produire un flux commun de sortie qui est destiné à alimenter une installation consommatrice, le procédé assurant la régulation du flux commun de sortie en fonction d'une valeur de consigne prédéterminée, le procédé comportant les étapes consistant à :
- mesurer au moins une variable représentative du flux commun de sortie ;
- déterminer, pour chaque appareil un ordre de commande correspondant à un état de fonctionnement de l'appareil parmi un ensemble fini d'états de fonctionnement prédéterminés ; et
- commander les appareils à partir des ordres de commande déterminés.

L'invention s'applique en particulier à la régulation de plusieurs unités de production de gaz fonctionnant en tout ou rien, notamment de compresseurs d'air, dont les sorties sont reliées en parallèle afin de fournir un gaz sous pression à une installation consommatrice, notamment un réseau d'alimentation d'une usine.

Dans de telles applications, les besoins en gaz de l'installation consommatrice varient au cours du temps de sorte que le flux commun de sortie produit par les compresseurs doit être régulé. En particulier, il est souhaitable que la pression, à la sortie commune des compresseurs, soit maintenue aussi proche que possible d'une valeur de consigne prédéterminée.

Dans les installations connues, plusieurs compresseurs sont montés en parallèle. Ainsi, par exemple, pour une consommation moyenne de 1000 m³/heure, et pouvant atteindre ponctuellement 1500 m³/heure, trois compresseurs ayant un débit nominal de 500 m³/heure sont installés en parallèle. En moyenne, seuls deux compresseurs fonctionnent simultanément, le troisième compresseur étant, la majeure partie du temps, inactif.

Dans ce type d'installation, les compresseurs ont trois états de fonctionnement distincts. Le premier état correspond à l'arrêt du compresseur, les moyens d'entraînement mécanique étant arrêtés. Le second état correspond à un état débrayé ou "de marche à vide" du compresseur dans lequel les moyens d'entraînement mécanique fonctionnent mais les moyens de compression de l'air sont débrayés. Le troisième état correspond à un état embrayé ou "de production" du compresseur, dans lequel les moyens d'entraînement mécanique fonctionnent et le compresseur fournit de l'air comprimé en sortie.

Les procédés actuels de régulation de la pression de sortie de tels ensembles de compresseurs consistent essentiellement à mesurer la pression à la sortie commune des compresseurs et à comparer celle-ci à un ensemble de seuils d'activation ou de désactivation de chacun des compresseurs.

En particulier, lorsque l'installation comporte trois compresseurs, le procédé met en oeuvre six seuils, associés deux à deux à un compresseur. Ainsi, chaque compresseur est associé à un seuil d'activation et à un seuil de désactivation. Comme les seuils correspondent chacun à un compresseur, le compresseur désactivé le premier est toujours le même. De même, le compresseur fonctionnant prioritairement est également toujours le même.

Afin de résoudre ce problème, il a été proposé de permuter les seuils entre les différents compresseurs afin de chercher à répartir le temps de fonctionnement entre les différents compresseurs. Cette permutation des seuils s'effectue avec une période de temps relativement longue, de l'ordre d'une semaine.

Les seuils étant associés chacun à un compresseur, on conçoit que le système formé des trois compresseurs est oscillant, la pression de sortie variant entre les seuils supérieurs et inférieurs. Aussi, la pression évolue de manière importante en sortie, ce qui conduit à une consommation excessive d'énergie.

L'invention a pour but de proposer un procédé de régulation limitant les plages de variations de la pression en sortie des compresseurs, et qui permet ainsi de réduire la consommation totale d'énergie.

A cet effet, l'invention a pour objet un procédé de régulation d'au moins deux appareils de production caractérisé en ce qu'au moins deux variables représentatives du flux commun de sortie sont mesurées et les ordres de commande sont déterminés par un régulateur à logique floue mettant en oeuvre les étapes consistant à :
- construire, à partir des variables mesurée, des variables floues d'entrée ;
- déterminer, pour au moins un appareil, à partir desdites variables floues d'entrée et d'une base de connaissances préalablement élaborée et ne dépendant pas des caractéristiques intrinsèques des appareils de production, un ordre de commande correspondant à l'un des états de fonctionnement parmi l'ensemble fini d'états de fonctionnement prédéterminés ; et
- appliquer l'ordre de commande déterminé au ou à chaque appareil .

Suivant des variantes de mise en oeuvre, le procédé comporte l'une ou plusieurs des caractéristiques suivantes :
- l'une desdites variables mesurées est une estimation de la dérivée d'un ordre prédéterminé par rapport au temps d'une autre desdites variables mesurées ;
- les appareils de production sont des compresseurs de gaz et les variables mesurées sont au moins la pression et la vitesse de variation de pression ;
- il comporte en outre les étapes consistant à :

. comparer au moins l'une des deux variables mesurées représentatives du flux sortant à un ensemble de seuils prédéterminés ;
. déterminer un ordre de commande correspondant à l'un des états de fonctionnement parmi l'ensemble fini d'états de fonctionnement prédéterminés, pour au moins un appareil, lorsque la ou l'une desdites variables objets de la comparaison franchit un seuil prédéterminé, quels que soient les ordres de commande déterminés par le régulateur à logique floue ; et
. appliquer l'ordre de commande déterminé à au moins un appareil de production ;

- lorsque la ou l'une desdites variables objets de la comparaison franchit un seuil prédéterminé, une temporisation est déclenchée et l'ordre de commande déterminé n'est appliqué à l'un des appareils de production qu'au terme de la période de temporisation si la variable considérée est toujours au-delà dudit seuil prédéterminé ;
- pendant la période de temporisation, la vitesse de variation de la variable ayant franchi le seuil prédéterminé est comparée à un seuil de référence et l'ordre de commande déterminé est appliqué avant le terme de la période de temporisation si ladite vitesse de variation franchit le seuil de référence ;
- pour au moins un état de fonctionnement, la durée totale de fonctionnement de chaque appareil de production est mémorisée et l'appareil de production auquel est appliqué l'ordre de commande déterminé associé au ou à chaque état est choisi parmi les appareils de production totalisant la plus faible durée totale de fonctionnement dans l'état de fonctionnement résultant de l'application de l'ordre de commande ;
- pour au moins un état de fonctionnement, la durée totale de fonctionnement de chaque appareil de production est mémorisée et des permutations des états de fonctionnement entre les appareils sont opérées, lorsque la différence entre les durées totales de fonctionnement des appareils dans les états de fonctionnement considéré dépasse un seuil prédéterminé ;
- les variables floues d'entrée sont établies à partir de courbes définies sur tout l'univers de discours des variables mesurées, ces courbes étant toutes de forme analogue et régulièrement réparties sur l'univers de discours ;
- les courbes sont de forme sensiblement triangulaire dans leur zone non nulle ; et
- ledit ensemble fini d'états de fonctionnement de chaque appareil comporte un état de marche à vide et un état d'arrêt et la durée de marche à vide d'un appareil, précédent un arrêt, est d'autant plus courte que le nombre d'arrêts dudit appareil déjà réalisés au cours d'une période de temps précédente déterminée est faible.

L'invention sera mieux comprise à la lecture de la description qui va suivre, donnée uniquement à titre d'exemple et faite en se référant aux dessins sur lesquels :
- la figure 1 est une vue schématique d'une installation de production d'air comprimé ;
- la figure 2 est un organigramme montrant les étapes principales du fonctionnement du régulateur ;
- la figure 3 est une courbe montrant deux exemples d'évolution de la pression de sortie au cours du temps ;
- la figure 4 est un organigramme détaillant l'algorithme de gestion des permutations entre les compresseurs ;
- la figure 5 est une vue schématique du régulateur à logique floue ;
- les figures 6 et 7 sont des courbes de détermination de variables floues en fonction des univers de discours, à savoir respectivement la pression et la dérivée de la pression par rapport au temps ;
- la figure 8 est un tableau résumant les règles d'inférence déterminant les états possibles de fonctionnement d'un compresseur en fonction de la logique de prise de décision ;
- la figure 9 est un graphique montrant les zones d'influence des variables floues sur l'ordre de commande à appliquer à un compresseur ; et
- la figure 10 est un organigramme détaillant l'algorithme de gestion des arrêts des compresseurs.

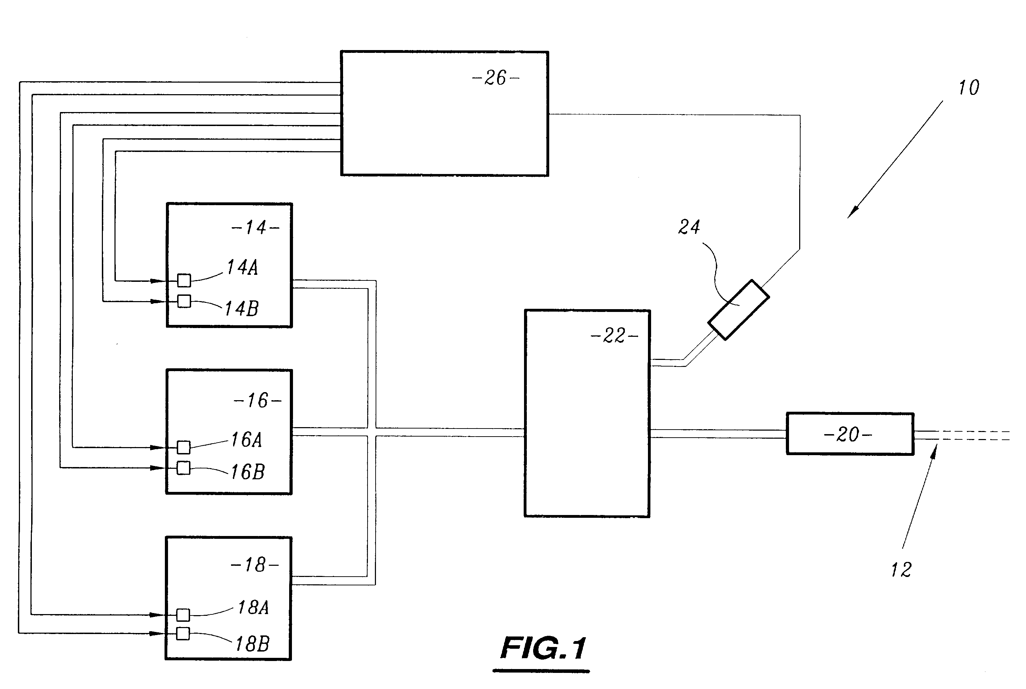

Sur la figure 1 est représentée une installation 10 de fourniture d'air comprimé vers une sortie 12 à laquelle est reliée une installation consommatrice non représentée, par exemple un réseau de distribution d'un site industriel.

L'installation 10 comporte trois compresseurs identiques 14, 16, 18 dont les sorties sont reliées en parallèle. La sortie commune des compresseurs est reliée à une unité 20 de séchage et de filtration de l'air comprimé. Une capacité tampon 22 est interposée entre l'unité de séchage et de filtration 20 et la sortie commune des compresseurs. La sortie 12 est prévue en aval de l'unité de séchage. En variante, l'ordre de capacité tampon 22 et de l'unité 20 est inversé.

Un capteur de pression 24 est monté sur la capacité tampon 22. Ce capteur de pression est relié à un régulateur 26, formé par exemple par un automate programmable. Ce dernier est relié par un faisceau de fils de commande adaptés à chacun des compresseurs 14, 16, 18.

En particulier, chaque compresseur comporte un premier relais, noté 14A, 16A, 18A, pour la commande de la mise en marche et de l'arrêt du compresseur. En outre, chaque compresseur comporte un second relais, noté 14B, 16B, 18B, permettant d'activer ou de désactiver la production d'air comprimé lorsque le compresseur est en marche. Ainsi, ce relais permet la commutation du compresseur entre son état de marche à vide et son état de production.

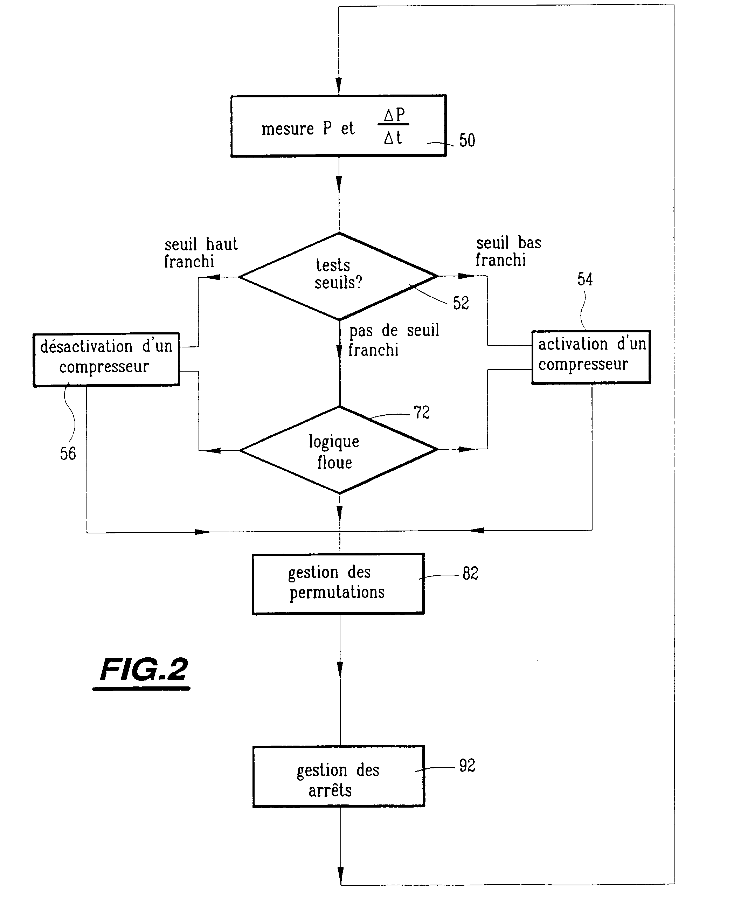

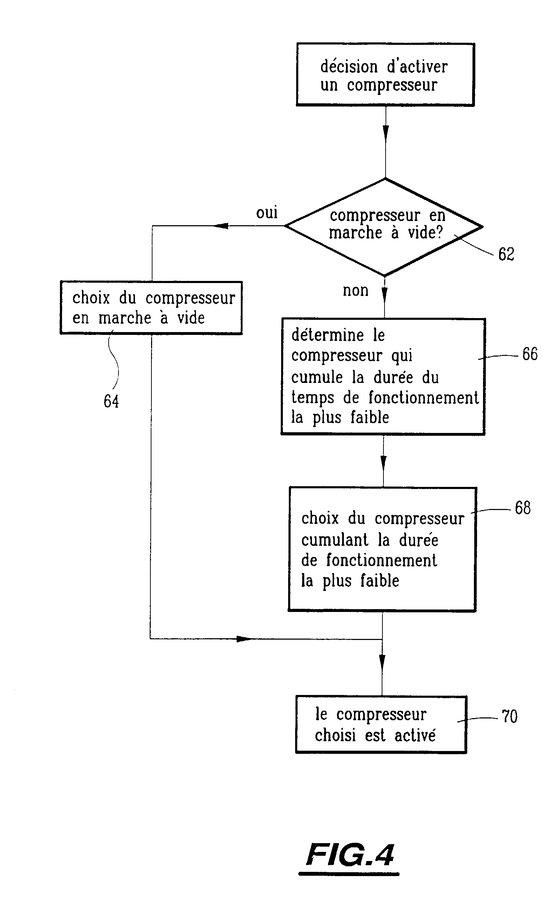

Sur la figure 2, sont représentées les principales étapes du fonctionnement du régulateur 26.

Lors d'une première étape 50, le régulateur 26 mesure, par l'intermédiaire du capteur 24, d'une part la pression P à l'intérieur de la capacité tampon 22 et d'autre part la vitesse de variation de pression dans cette capacité au cours du temps, c'est-à-dire une estimation de la dérivée de la pression par rapport au temps, notée ΔP/Δt.

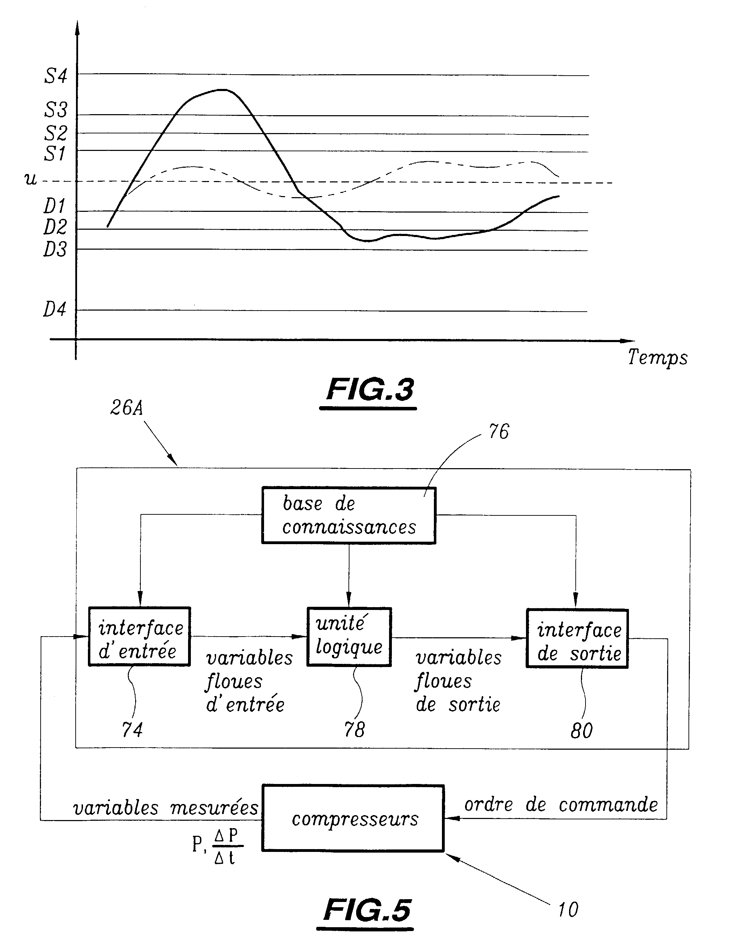

Un premier test est effectué, à l'étape 52. Il consiste à comparer la pression P par rapport à un ensemble de seuils représentés sur la figure 3.

Sur cette figure est représenté en trait continu un exemple de courbe de variation de la pression P en fonction du temps.

La pression de consigne, notée u, est représentée par une ligne pointillée.

Cette pression u est encadrée par un ensemble de quatre seuils hauts, notés S1, S2, S3, S4 et un ensemble de quatre seuils bas, notés D1, D2, D3, D4. Ils correspondent respectivement à des pressions pour lesquelles il est nécessaire d'activer ou de désactiver l'un des compresseurs.

Dans l'application considérée, l'activation d'un compresseur consiste à commuter celui-ci de son état arrêté ou de son état de marche à vide à son état de production. A l'inverse, la désactivation consiste à commuter un compresseur de son état de production à son état de marche à vide.

Chaque seuil est associé à une temporisation définie par l'utilisateur. Les durées de temporisation sont d'autant plus faibles que le seuil considéré est éloigné de la valeur de consigne u.

Ainsi, lorsque la valeur de la pression P franchit un seuil, la temporisation associée est déclenchée. Quand la temporisation arrive à son terme, si la valeur de la pression est toujours au-delà du seuil considéré, une action correctrice est mise en oeuvre sur l'un des compresseurs. Suivant que le seuil soit supérieur ou inférieur à la valeur de consigne u, l'un des compresseurs est activé ou, au contraire, désactivé afin de faire varier la pression en sortie.

Ainsi, on comprend que, si par exemple la pression P augmente très rapidement, les seuils S2 ou S3, qui bénéficient de temporisations plus courtes que le seuil S1, peuvent être franchis et leur durée de temporisation écoulée, avant que la temporisation du seuil S1 n'ait expirée. Ainsi, une action correctrice visant à désactiver l'un des compresseurs est engagée avant que la durée de temporisation du seuil S1 ne soit écoulée.

De plus, le régulateur 26 compare simultanément la vitesse de variation de pression ΔP/Δt à un certain nombre de valeurs de référence prédéterminées, afin de mettre en oeuvre une action correctrice dès qu'un seuil est franchi, et avant même que la temporisation associée n'ait atteint son terme, si la valeur de la vitesse de variation de pression ΔP/Δt est supérieure en valeur absolue à une valeur de référence prédéterminée.

Les seuils tels que définis dans le procédé ne sont pas affectés à l'un des compresseurs. En effet, le franchissement d'un seuil conduit uniquement le régulateur à commander l'activation ou la désactivation de l'un des compresseurs. Le compresseur auquel l'ordre de commande est appliqué est déterminé par des sous-programmes de gestion d'activation et de désactivation des compresseurs, notés respectivement 54 et 56 sur la figure 2.

L'organigramme de la figure 4 explicite le procédé d'activation d'un compresseur mis en oeuvre à l'étape 54.

Lorsqu'une action correctrice visant à l'activation d'un compresseur est décidée, le logiciel chargé dans le régulateur vérifie, à l'étape 62, si l'un des compresseurs est dans un état de marche à vide, c'est-à-dire s'il est en marche et si la production d'air comprimé est désactivée. Si tel est le cas, il choisit, à l'étape 64, ce compresseur en vue de son activation.

Si aucun des compresseurs n'est dans un état de marche à vide, le régulateur détermine, à l'étape 66, le compresseur dont la durée totale de fonctionnement en production est la plus faible. A cet effet, le régulateur comporte des moyens de mémorisation des durées de fonctionnement cumulées de chacun des compresseurs depuis le démarrage de l'installation. La détermination du compresseur présentant la durée de fonctionnement cumulée la plus faible s'effectue par comparaison deux à deux des durées de fonctionnement de chaque compresseur. A l'étape 68, le régulateur choisit le compresseur ayant la durée de fonctionnement la plus faible en vue de commander son activation.

Enfin, à l'étape 70, le régulateur 26 commande l'activation du compresseur choisi.

Si le compresseur choisi est en état de marche à vide, il commande uniquement l'activation de celui-ci. Si aucun compresseur n'est en marche à vide, il commande la mise en marche du compresseur choisi (celui ayant la durée de fonctionnement cumulée la plus faible) et commande simultanément son activation.

L'étape 56 de désactivation d'un compresseur est analogue à l'étape d'activation décrite en regard de la figure 4. Toutefois, le compresseur désactivé est prioritairement celui qui cumule la durée de fonctionnement la plus élevée.

Si aucun des seuils n'est franchi, de sorte que la pression P varie entre les seuils S1 et D1, comme représenté en traits mixtes sur la figure 3, le régulateur passe à l'étape 72 et met en oeuvre un schéma de décision à logique floue.

Le schéma du régulateur à logique floue est représentée sur la figure 5.

Sur cette figure, sont symbolisés d'une part l'ensemble des compresseurs de l'installation de production d'air comprimé 10 et d'autre part le régulateur à logique floue noté 26A.

Les variables représentatives du flux d'air comprimé produit P et ΔP/Δt (mesurées par le capteur 24) sont d'abord introduites dans une interface d'entrée 74 adaptée pour transformer les variables mesurées en variables floues d'entrée à partir de données issues d'une base de connaissances 76 mémorisée dans le régulateur. Cette transformation sera expliquée dans la suite de la description.

Les variables floues ainsi déterminées sont ensuite introduites dans une unité logique 78 adaptée pour leur traitement. Ce traitement sera expliqué en détail dans la suite de la description.

L'unité logique 78 crée à partir des variables floues d'entrée et des données contenues dans la base de connaissances 76 des variables floues de sortie adressées à une interface de sortie 80. Cette dernière est adaptée pour adresser des ordres de commande aux divers compresseurs de l'installation de compression d'air comprimé 10 en fonction des variables floues de sortie. La détermination des ordres de commande à partir des variables floues de sortie sera expliquée dans la suite de la description.

Pour la mise en oeuvre du processus de décision par logique floue, le procédé selon l'invention considère comme univers de discours d'une part l'écart de pression Ep et d'autre part la vitesse de variation de pression ΔP/Δt. L'écart de pression Ep correspond à la différence entre la pression P mesurée par le capteur 24 et la valeur de consigne u.

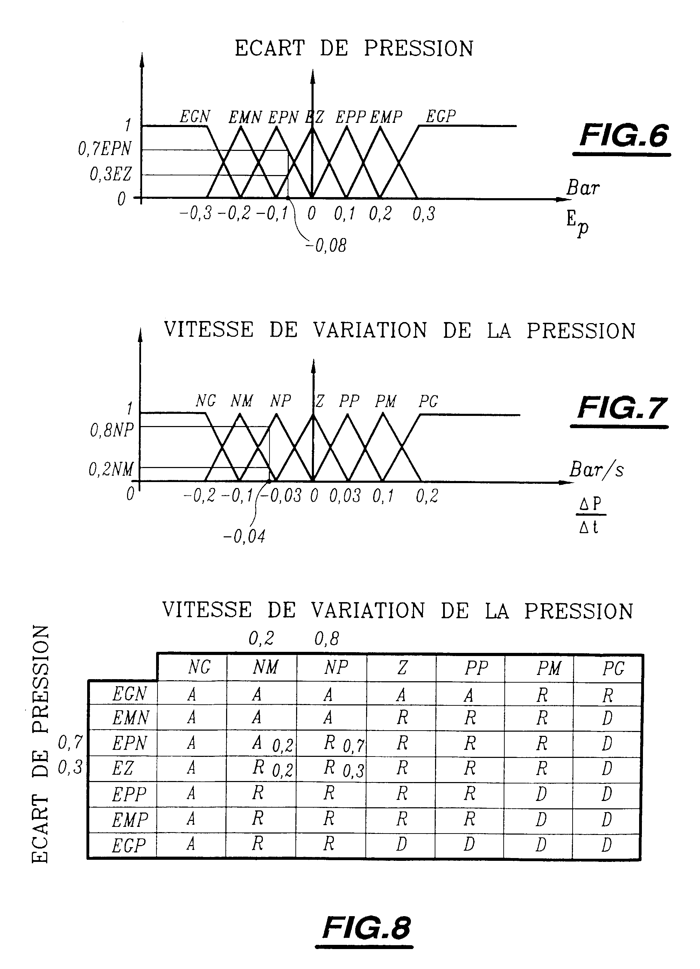

Chaque univers de discours est découpé en sept états distincts, comme représenté sur les figures 6 et 7.

Chaque état est défini par une courbe ayant généralement la forme d'un signal triangulaire symétrique centré sur une valeur d'écart de pression Ep ou de vitesse de variation de pression ΔP/Δt caractéristique de l'état. Les pentes des signaux triangulaires sont égales pour tous les états associés à la pression relative. De plus, les sommets des courbes sont régulièrement et symétriquement décalés suivant l'axe des abscisses.

Ces courbes sont définies de manière empirique et ne dépendent pas des caractéristiques intrinsèques des compresseurs.

Les différents états correspondant aux variables floues d'entrée des deux univers de discours sont définis de la manière suivante :

| Pression relative (figure 6) | Variation de pression (figure 7) |
|---|---|
| EGN : Ecart Grand Négatif | NG : Négatif Grand |
| EMN : Ecart Moyen Négatif | NM : Négatif Moyen |
| EPN : Ecart Petit Négatif | NP : Négatif Petit |
| EZ : Ecart Zéro | Z: Zéro |
| EPP : Ecart Petit Positif | PP : Positif Petit |
| EMP : Ecart Moyen Positif | PM : Positif Moyen |
| EGP : Ecart Grand Positif | PG : Positif Grand |

Les différents états correspondent, pour l'écart de pression Ep, à une appréciation qualitative de l'écart entre la valeur de consigne u et la pression mesurée P et, pour la vitesse de variation de pression ΔP/Δt, à une appréciation qualitative de l'évolution temporelle de la pression par rapport à une référence nulle correspondant à une pression constante au cours du temps.

Le procédé de prise de décision par mise en oeuvre de la logique floue va maintenant être décrit sur un exemple.

Dans l'exemple considéré, on suppose que l'écart de pression Ep est égale à -0,08 bars et que la vitesse de variation de pression ΔP/Δt est de -0,04 bars/seconde.

A partir des figures 6 et 7, et en projetant les valeurs de la pression relative et de la variation de pression sur les univers de discours correspondants, on obtient, à partir de l'interface d'entrée 74, quatre variables floues dites d'entrée égales à 0,7 EPN et 0,3 EZ pour l'écart de pression et à 0,8 NP et 0,2 NM pour la vitesse de variation de pression.

A partir de la règle du "Min-Max", il est possible à l'unité logique 78 d'établir des valeurs de variables floues intermédiaires. Celles-ci s'expriment de la manière suivante :
Min (NM, EPN) = 0,2
Min (NM, EZ) = 0,2
Min (NP, EPN) = 0,7
Min (NP, EZ) = 0,3.

Sur la figure 8 est représenté l'ensemble des états possibles qui peuvent être déterminés par la logique floue de prise de décision. Ainsi, les trois état possibles sont notés A pour la variable floue "Activation", R pour la variable floue "Rien" et D pour la variable floue "Désactivation".

Le tableau de la figure 8 est défini de manière empirique à partir de l'expérience du type d'installation considéré et ne dépend pas des caractéristiques intrinsèques des compresseurs.

Comme représenté sur la figure 8, les valeurs obtenues en prenant les minima des variables floues d'entrée sont reportées dans le tableau regroupant les états possibles à l'intersection des lignes correspondant aux variables floues associées à l'écart de pression et aux colonnes correspondant aux variables floues associées à la vitesse de variation de pression.

Parmi les variables floues de sortie ainsi déterminées, on considère le coefficient maximal associé à chacune de celles-ci. Dans l'exemple considéré, on obtient :
Max (Rien) = 0,7
Max (Activation) = 0,2.

Après détermination de ces variables floues de sortie, l'interface de sortie 80 établit dans l'univers de discours de sortie l'ordre de commande à effectuer sur l'un des compresseurs.

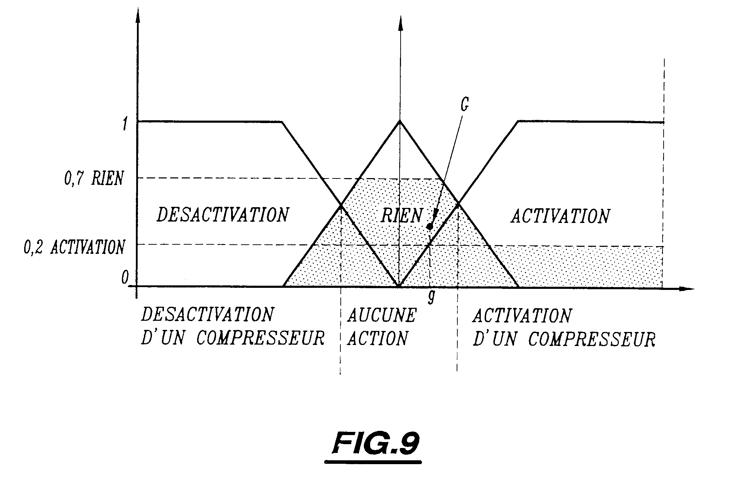

A cet effet, la figure 9 définit des zones d'influence délimitées par des courbes limites. Elles correspondent chacune respectivement à la désactivation de l'un des compresseurs, à aucune action, ou à l'activation d'un compresseur. L'univers de discours de la variable de sortie correspondant à l'ordre de commande apparaît en abscisse. Les courbes de la figure 9 sont déterminées de manière empirique et ne dépendent pas des caractéristiques intrinsèques des compresseurs.

Les deux variables floues de sortie "0,7 Rien" et "0,2 Activation" étant reportées sur le graphique de la figure 9, on définit les zones d'influence privilégiées. Celles-ci sont représentées en gris sur la figure 8.

Afin de déterminer l'ordre de commande à appliquer à l'un des compresseurs, on détermine le barycentre G des zones d'influence privilégiées et on effectue la projection g de celui-ci sur l'axe des abscisses.

Dans l'exemple considéré, l'ordre de commande correspond à la prise d'aucune action, c'est-à-dire au maintien en l'état du nombre de compresseurs activés et du nombre de compresseurs désactivés.

Si l'algorithme de décision à logique floue mis en oeuvre à l'étape 72 décide de l'activation ou de la désactivation de l'un des compresseurs, les étapes respectivement 54 ou 56 sont mises en oeuvre.

Afin d'éviter une usure différentielle des compresseurs, l'algorithme mis en oeuvre par le régulateur 26 et schématisé sur la figure 2 comporte ensuite, à l'étape 82, une routine de permutation des compresseurs afin de répartir régulièrement les durées de fonctionnement entre l'ensemble des compresseurs de l'installation.

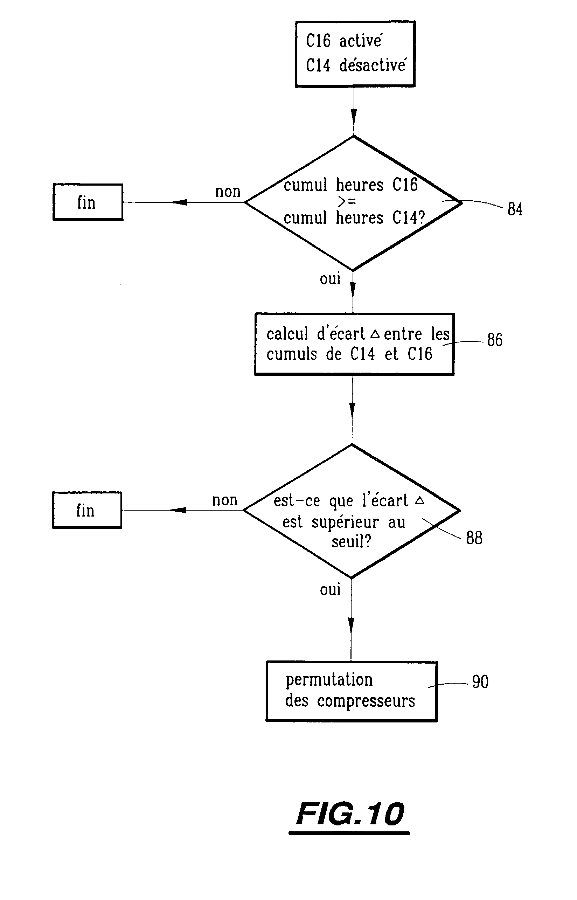

Cette routine est exécutée par l'automate formant le régulateur 26 et met en oeuvre essentiellement des tests sur les durées cumulées de fonctionnement des compresseurs. Elle est schématisée sur la figure 10 en ce qui concerne la détermination de la priorité de fonctionnement entre les compresseurs 14 et 16. Ces routines comparent les compresseurs deux à deux. Ainsi, dans le cas d'une installation comportant trois compresseurs, l'automate met en oeuvre six routines de ce type.

On suppose qu'initialement le compresseur 16 est activé alors que le compresseur 14 est désactivé.

Afin de déterminer si la permutation entre les deux compresseurs est nécessaire, la routine vérifie, à l'étape 84, si la durée de fonctionnement cumulée du compresseur 16 est supérieure ou égale à la durée cumulée de fonctionnement du compresseur 14. Si la réponse est négative, aucune action n'est mise en oeuvre. Si la réponse est positive, la routine calcule à l'étape 86 l'écart Δ entre les durées cumulées de fonctionnement des compresseurs 16 et 14.

A l'étape 88, la routine compare enfin cet écart Δ à un seuil prédéterminé. Si l'écart Δ est inférieur à ce seuil, aucune action n'est entreprise. Si par contre l'écart Δ est supérieur à ce seuil prédéterminé, la permutation des deux compresseurs est effectuée, à l'étape 90. Ainsi, le compresseur 16, précédemment activé, est désactivé et le compresseur 14, initialement désactivé, est activé.

Enfin, le procédé mis en oeuvre par le régulateur 26 comporte une étape 92 destinée à la gestion des arrêts des compresseurs afin de provoquer l'arrêt de ceux-ci au terme d'une durée de marche à vide déterminée.

Afin de limiter, le nombre d'arrêts et de remises en route d'un compresseur dans une période de temps considéré, par exemple une heure, la durée de marche à vide au terme de laquelle un compresseur est arrêté est déterminée à partir du nombre d'arrêts déjà effectués dans une période de temps considérée.

En particulier, plus le nombre d'arrêts effectués au cours de l'heure précédente est élevé, plus la durée de marche à vide au terme de laquelle un compresseur est arrêté est longue.

Ainsi, si par exemple, le compresseur peut être arrêté six fois par heure, et qu'il n'a pas encore été arrêté dans l'heure qui précède l'instant considéré, le compresseur fonctionnant en marche à vide sera arrêté après un délai très bref, par exemple une minute. Si par contre le compresseur a déjà été arrêté trois fois au cours de l'heure précédente, le compresseur fonctionnant en marche à vide sera arrêté après un délai plus long de cinq minutes.

La description qui est faite ici porte sur une installation de compresseurs d'air. Toutefois, le procédé selon l'invention peut être mis en oeuvre sur des compresseurs de tout type de gaz, ou encore sur tout type d'installation comportant des appareils de production ayant un ensemble fini d'états de fonctionnement et dont les sorties sont reliées en parallèle pour la production d'un flux commun de sortie.

Le procédé mis en oeuvre ici utilisant un processus de décision par logique floue peut être facilement transposé d'une installation à une autre quel que soit le type des compresseurs utilisés ou d'installations utilisées puisque les données issues de la base de connaissances sont indépendantes du type de compresseur mis en oeuvre et ne résultent que de connaissances établies de manière empirique sur le type d'installation considéré.

De plus, la mise en oeuvre combinée d'une logique prise de décision à logique floue et l'utilisation de seuils dans le cas où le traitement par la logique floue est insuffisant rend le procédé très fiable tout en étant d'une grande précision.

Enfin, le procédé de régulation peut être suivi à distance, notamment par un ordinateur relié au régulateur 26 par une liaison de transmission de données, par exemple le réseau téléphonique. De plus, les paramètres de régulation, notamment la valeur de consigne, peuvent alors être modifiés à distance.

Le procédé de régulation mis en oeuvre permet que la courbe de consommation d'énergie en fonction du temps suive assez précisément le profil de la courbe du débit d'air produit. Il permet ainsi d'optimiser la consommation d'énergie tout en satisfaisant au plus près aux besoins de l'installation aval.

## Revendications

1. Procédé de régulation d'au moins deux appareils de production (14, 16, 18) dont les sorties sont reliées en parallèle pour produire un flux commun de sortie qui est destiné à alimenter une installation consommatrice, le procédé assurant la régulation du flux commun de sortie en fonction d'une valeur de consigne prédéterminée (u), le procédé comportant les étapes consistant à :
- mesurer au moins une variable représentative du flux commun de sortie ;
- déterminer, pour chaque appareil (14, 16, 18) un ordre de commande correspondant à un état de fonctionnement de l'appareil parmi un ensemble fini d'états de fonctionnement prédéterminés ; et
- commander les appareils à partir des ordres de commande déterminés ;
caractérisé en ce qu'au moins deux variables (P, ΔP/Δt) représentatives du flux commun de sortie sont mesurées et les ordres de commande sont déterminés par un régulateur à logique floue (26A) mettant en oeuvre les étapes consistant à :
- construire, à partir des variables mesurées (P, ΔP/Δt), des variables floues d'entrée ;
- déterminer, pour au moins un appareil, à partir desdites variables floues d'entrée et d'une base de connaissances (76) préalablement élaborée et ne dépendant pas des caractéristiques intrinsèques des appareils de production, un ordre de commande correspondant à l'un des états de fonctionnement parmi l'ensemble fini d'états de fonctionnement prédéterminés ; et
- appliquer l'ordre de commande déterminé au ou à chaque appareil (14, 16, 18).

2. Procédé selon la revendication 1, caractérisé en ce que l'une desdites variables mesurées est une estimation de la dérivée d'un ordre prédéterminé par rapport au temps d'une autre desdites variables mesurées.

3. Procédé selon la revendication 2, caractérisé en ce que les appareils de production sont des compresseurs de gaz (14, 16, 18) et en ce que les variables mesurées sont au moins la pression (P) et la vitesse de variation de pression (ΔP/Δt).

4. Procédé selon l'une quelconque des revendications précédentes, caractérisé en ce qu'il comporte en outre les étapes consistant à :
- comparer au moins l'une (P) des deux variables mesurées représentatives du flux sortant à un ensemble de seuils prédéterminés (S1, S2, S3, S4, D1, D2, D3, D4) ;
- déterminer un ordre de commande correspondant à l'un des états de fonctionnement parmi l'ensemble fini d'états de fonctionnement prédéterminés, pour au moins un appareil, lorsque la ou l'une desdites variables objets de la comparaison franchit un seuil prédéterminé, quels que soient les ordres de commande déterminés par le régulateur à logique floue (26A); et
- appliquer l'ordre de commande déterminé à au moins un appareil de production.

5. Procédé selon la revendication 4, caractérisé en ce que, lorsque la ou l'une desdites variables objets de la comparaison franchit un seuil prédéterminé, une temporisation est déclenchée et l'ordre de commande déterminé n'est appliqué à l'un des appareils de production qu'au terme de la période de temporisation si la variable considérée est toujours au-delà dudit seuil prédéterminé.

6. Procédé selon la revendication 5, caractérisé en ce que, pendant la période de temporisation, la vitesse de variation de la variable ayant franchi le seuil prédéterminé est comparée à un seuil de référence et l'ordre de commande déterminé est appliqué avant le terme de la période de temporisation si ladite vitesse de variation franchit le seuil de référence.

7. Procédé selon l'une quelconque des revendications précédentes, caractérisé en ce que, pour au moins un état de fonctionnement, la durée totale de fonctionnement de chaque appareil de production est mémorisée et en ce que l'appareil de production auquel est appliqué l'ordre de commande déterminé associé au ou à chaque état est choisi parmi les appareils de production totalisant la plus faible durée totale de fonctionnement dans l'état de fonctionnement résultant de l'application de l'ordre de commande.

8. Procédé selon l'une quelconque des revendications précédentes, caractérisé en ce que, pour au moins un état de fonctionnement, la durée totale de fonctionnement de chaque appareil de production est mémorisée et en ce que des permutations des états de fonctionnement entre les appareils sont opérées, lorsque la différence entre les durées totales de fonctionnement des appareils dans les états de fonctionnement considéré dépasse un seuil prédéterminé.

9. Procédé selon l'une quelconque des revendications précédentes, caractérisé en ce que les variables floues d'entrée sont établies à partir de courbes définies sur tout l'univers de discours des variables mesurées, ces courbes étant toutes de forme analogue et régulièrement réparties sur l'univers de discours.

10. Procédé selon la revendication 9, caractérisé en ce que les courbes sont de forme sensiblement triangulaire dans leur zone non nulle.

11. Procédé selon l'une quelconque des revendications précédentes, caractérisé en ce que ledit ensemble fini d'états de fonctionnement de chaque appareil comporte un état de marche à vide et un état d'arrêt et en ce que la durée de marche à vide d'un appareil, précédent un arrêt, est d'autant plus courte que le nombre d'arrêts dudit appareil déjà réalisés au cours d'une période de temps précédente déterminée est faible.
